# EUROPEAN PATENT SPECIFICATION

(11) **EP 4 381 256 B1**
(45) Date of publication and mention of the grant of the patent: **07.05.2025**
(21) Application number: 22812576.1
(22) Date of filing: 31.10.2022
(51) Int. Cl.: G01G 19/08, B65F 3/04, B65F 3/02

(54) **A SYSTEM INSTALLABLE ON A GARBAGE TRUCK FOR WEIGHING GARBAGE CONTAINERS, A RELATED USE AND A GARBAGE TRUCK**
AUF EINEM MÜLLWAGEN INSTALLIERBARES SYSTEM ZUM WIEGEN VON MÜLLBEHÄLTERN, ZUGEHÖRIGE VERWENDUNG UND MÜLLWAGEN
SYSTÈME POUVANT ÊTRE INSTALLÉ SUR UN CAMION À ORDURES DESTINÉ À PESER DES CONTENEURS À ORDURES, UTILISATION ASSOCIÉE ET CAMION À ORDURES

(30) Priority: 31.10.2021 GR 20210100754; 27.05.2022 GR 20220100444
(43) Date of publication of application: 12.06.2024
(73) Proprietor: EMDOT SINGLE MEMBER SOCIETE ANONYME, 15232 Chalandri (GR)
(72) Inventor: MINITSIOS, Georgios, 13231 Petropoli (GR); CHONDRONASIOS, Athanasios, 41500 Larissa (GR)
(74) Representative: Araujo, Daniel
(86) International application number: PCT/EP2022/080368
(87) International publication number: WO 2023/073230

(56) References cited:
- JP-A- 2002 080 101
- JP-B2- H07 112 881

## Description

### Technical Field

The present disclosure concerns a system installable on a garbage truck for weighing garbage containers, particularly for weighing a plurality of garbage container pickup (pick-up, pick up) types. The present disclosure also concerns a related use of said system, and a garbage truck comprising said system. Hence, the present disclosure relates to systems (machinery) and methods for picking up or collecting garbage (trash) and the like, involving weighing the garbage.

### Background

There are known types of garbage trucks which integrate systems for measuring the weight of garbage containers being picked up by the garbage truck. Weighing a garbage container serves the purpose of measuring or estimating the weight of the garbage in the container, as is often required by the authorities and/or the regulations or norms related to the garbage collection process. It is also known that there exist several types of garbage containers which differ from each other by their physical features which allow for the garbage container in each case to be picked up, i.e. be held and raised, by a garbage truck. In some known examples, such features of said garbage containers include the garbage container having a particular shape for fitting a collection mechanism of the garbage truck, or include the garbage truck having at its surface other features such as protrusions, recessions or other metallic or plastic parts, so that said features can be coupled to corresponding parts of the pick-up (lifting) mechanism of a garbage truck. Said garbage container's features which define the way by which the garbage truck can pick up the garbage container define the pick-up type of the garbage container. This means that the garbage container may also be of two or more pick-up (pick up) types, i.e. the container may comprise features which may allow the pick-up of the container by two or more, respectively, types of lifting mechanisms. Nevertheless, each of the previously known garbage trucks which have a lifting mechanism which is capable of weighing, is able to pick up only one pick-up type of garbage containers. This is an important problem considering that a garbage truck may have to operate inside or between different areas which have garbage containers of different pickup (pick-up) types. Moreover, given that in the aforementioned previously known types of garbage trucks, the respective systems which pick up and weigh the containers are permanently integrated in the truck's structure, it is not easy adapt said trucks when there is need of changing the pick-up type of the containers that need to be processed, and this is an important problem. In addition, given that said trucks in the prior art are only suitable for handling and weighing containers of a single pick-up type, they are prone to becoming completely inoperable when the lifting and weighing mechanism of the truck is damaged such that it can no longer handle a container of said single pickup type, and this is an important problem. Relevant prior art documents are JP 2002 080101 A and JP H07 112881 B2. The present disclosure solves the aforementioned important problems.

### Summary of the Invention

The present disclosure solves the aforementioned problems because it offers a system which simultaneously, i) is capable of weighing and picking up two pickup (pick-up) types of garbage containers; ii) it may be used with existing garbage trucks for allowing said trucks to weighing garbage containers of different pick-up types; iii) it may improve the operability and reliability of the garbage truck so that it can still be operable, at least to some extent, when due to a damage of the system it cannot be operated with containers of one pickup type. Solving said problems may in turn reduce the costs associated with the garbage collection process involving said system, improve the procedural efficiency and reduce the time required for the garbage collection process, and positively impact the environment, at least due to the improved functionality that the system confers to the garbage trucks with which the system is used.

Specifically, the present invention in its first aspect concerns a system which is installable on a garbage truck for weighing a plurality of garbage container types, and comprises: an arm configured for supporting a garbage container of a plurality of types; a pick-up device located at an end of the arm and configured to engage and hold a trunnion of a garbage container of a first pickup type; a pick-up comb configured to engage and hold a lip of a garbage container of a second pick-up type; at least two load cells of which a first one is connected to the pick-up device and the second one is connected to the pick-up comb, wherein the first load cell is configured to measure a weight exerted on the pick-up device when the latter engages the garbage container of the first pickup type, and the second load cell is configured to measure a weight exerted on the pick-up comb when the latter engages the garbage container of the second pickup type; at least one motion sensor configured to record movement related to a collection of the garbage container of the first or second pickup type by the system; at least one inclination sensor configured to sense an inclination of a garbage truck when the system is installed on the garbage truck; and at least one electronic device configured to process and transmit data. The pick-up comb is attached either along the arm or at another end of the arm opposite the end where the pick-up device is located. It is noted that the pickup device may also be called trunnion adapter, and the pick-up comb may also be called comb lifting device or comb.

Advantageously, the invention can provide excellent weighing accuracy, as it can be adapted to the point of contact with the garbage, as a result of which it is possible to avoid adding to the measurements the weight of the rest of the collection mechanism of the truck, and also, the system allows for preferably using load cells with a relatively small measurement range, increasing the accuracy and resolution of the measurement.

The aforementioned system can advantageously be used with a garbage container of the first or of the second pickup type. Likewise, it can be used with a garbage container which comprises both the aforementioned lip and trunnion and, hence, is both of the first and second pickup type. The load cells of the system generally allow for measuring the weight of the garbage container, and hence, for estimating the weight of the garbage (trash) which is contained in the garbage container. Evidently, this functionality is available regardless of whether the garbage container is engaged using the pick-up device or the pick-up (pickup) comb, and therefore, said functionality is not compromised when having to switch between using the pick-up device and the pick-up (pickup) comb. The measurements offered by the motion sensor and the inclination sensor may be used for monitoring the pickup process, in particular the action of turning over the garbage container as is usually done during pickup depending on the types of said garbage container and truck. Also, said motion and inclination (tilt) measurements may be used for enabling or improving the accuracy of the weight measurements because the latter may depend on factors such as the inclination of the vehicle relatively to the ground, the position or inclination of the garbage container at the time of the measurement, the potential movement of the garbage inside the container during the handling of the container by the garbage truck, or another factor. Said factors may be taken into account by using appropriate algorithms which in some preferred embodiments of the invention are processed using the electronic device. Hence, in some preferred embodiments the at least one electronic device is operationally connected to at least a corresponding one of each of the at least one motion sensor, the at least two load cells, and the at least one inclination sensor. Although in said preferred embodiments the electronic device is operationally connected to the sensors and includes a logic that provides the measured of estimated weights, the skilled person may understand that the data related to said measurements may be processed in another controller or logic, and then passed to the aforementioned electronic device, in which case, the electronic device primarily serves its important functionality of transmitting the data. The data may most preferably relate to the measurements from the sensors or may be or include other type of data related to the operation of the system. In either case, the transmission of the data, preferably said transmission being a wireless one, may allow for the system's user(s) to gather and further process said data.

In an embodiment according to the first aspect of the invention, the system further comprises a third load cell connected to the pick-up comb, wherein the third load cell is configured to measure a weight exerted on the pick-up comb when the latter engages the garbage container of the second pickup type, the third load cell being at a distance from the second load cell such that the second and the third load cells can measure a load distribution along the pick-up comb. Measuring the load distribution along the pick-up comb may improve the accuracy of the weight measurement, especially when the garbage is unevenly distributed within the garbage container.

In an embodiment which is according to the first aspect of the invention, the system further comprises a bar which is located and configured to contact and push the garbage container of the first or second pickup type at a point of the container, such that, when the garbage container is at an operational position on a ground and is engaged by the pick-up device or the pick-up comb, said point of the container contacting the bar is located lower with respect to the points of contact of the container with said pick-up device or pick-up comb, respectively. Said bar can be called pushing pad, and is useful for turning over the container during the garbage collection process, because it may push said container from the container's part that is initially closer to the ground. Preferably, the system further comprises an additional load cell connected to the bar and configured to measure a weight exerted on the bar when the latter pushes the garbage container. Hence, when possibly turning over the container using the system, the load cell at the bar can aid monitoring the process which causes the weight distribution in the container to change. Likewise, the skilled part can understand that there may be more than one additional load cells connected to the bar at different points along the bar's length.

In an embodiment according to the first aspect of the invention, the system further comprises two or more load cell distortion limiters, and each load cell is connected to a corresponding one of the load cell distortion limiters, each load cell distortion limiter supporting and being configured to limit the distortion of the corresponding load cell when said distortion is above a threshold value. The distortion limiter generally serves the purpose of avoiding, preventing or simply reducing the possibility of damaging the load cell to which the distortion limiter is connected. The threshold value is usually provided by the manufacturer of the load cell and/or of the load cell distortion limiter. The load cell distortion limiter is also known as "overload protection" which is a term often used by manufacturers of load cells which are often coupled and being provided with some type of overload protection.

In a preferred embodiment wherein the system comprises the aforementioned distortion limiters, each load cell distortion limiter which is connected to a corresponding one of the load cells, is also correspondingly connected to the pick-up device or the pick-up comb or the aforementioned optionally present bar (pushing pad) to which said corresponding load cell may be connected. In these cases, the distortion limiter may more preferably be configured to support the pick-up device, the pick-up comb or the bar if the corresponding load cell is damaged or broken. This may advantageously allow the system to continue be in operation for collecting the garbage, even if one or more of the load cells are broken. Hence, in the event the capacity of the system to measure the weight is temporarily compromised due to the damaging of a load cell, advantageously the system would continue be, at least to some extent, operational.

In an embodiment, the system's at least one motion sensor comprises any of an inertial measurement unit, an accelerometer, a gyroscope, an inclinometer, a magnetometer, or another type of sensor. Most preferably the system comprises an inertial measurement unit which may comprise or act as the at least one motion sensor and the at least one inclinometer of the system. The use of the inertial measurement unit may advantageously offer accurate motion and tilt measurements, and may facilitate the fabrication of the system, and in particular, may facilitate the fabrication and integration in the system of the components related to the aforementioned motion and inclination measurements. Hence, in some particularly preferred embodiments, the at least one motion sensor comprises an inertial measurement unit, or the system comprises an inertial measurement unit (IMU) which comprises the motion and/or the inclination sensor. Likewise, the system may optionally comprise two or more IMUs, e.g. the system may have one IMU at the pick-up device, and a second IMU at the pick-up comb.

In some particularly preferred embodiments of the first aspect of the invention, the system further comprises one or more Radio-frequency identification (RFID) readers which is/are part of, or is/are operationally connected to, the at least one electronic device. Preferably the system comprises one RFID reader which is integrated with/in a tooth of the pick-up comb. In another embodiment the system comprises two RFID readers of which one is integrated with the tooth of the pick-up comb and the other is integrated with the arm. In other very preferred embodiments, the system comprises an RFID reader which is integrated with the pick-up comb or within a tooth of the pick-up comb, and comprises two antennas which are pointed (directed) towards two respective direction which are normal to each other. Most preferably, the first of said two antennas is directed towards a first direction that is towards a part of the garbage container when the pick-up comb engages the garbage container, and the second antenna is directed to a second direction that is normal or, more generally, forms a non-zero angle with the first direction, so that said second direction is towards said part of the garbage container when the latter is engaged by the pick-up device. It may be understood that the while the fist antenna is directed towards the container's lip that is engageable by the pick-up comb (the comb lifting device), the second antenna may be directed towards a different part of the container and serves to identify the container when the latter is engaged by the pickup device (the trunnion adapter). Preferably the garbage container's part(s) towards which said antennas are directed have RFID tag(s) for identifying the container.

In an embodiment according to the first aspect of the invention, the system's electronic device is connectable with, or comprises, preferably within a housing of the electronic device, any of an RFID reader for bin identification, means for identifying bins, means for GNSS satellite positioning, means for wireless communication (e.g. via a GSM system), means for interfacing with and downloading data from a tachograph, means for interfacing with and downloading data from a CAN bus (a Controller Area Nextwork), means for interfacing with and downloading data from an on-board diagnostics, an on board diagnostics (OBD) system, or a combination thereof. These optional features advantageously may allow or facilitate the connectivity of the system with some important data- and communication-related technologies for vehicles.

In an embodiment, the system further comprises one or more electronic units. Each electronic unit may comprise one or more of each of the at least one electronic device, the at least one inclination sensor and the at least one electronic device of the system. Hence, the electronic unit comprises at least a set of an inclination sensor, a motion sensor and an electronic device of the system. The components of the electronic unit are preferably within a case of said electronic unit, so that the latter is compact and can be installed as a whole on the pick-up device, or on the pick-up comb or elsewhere at the system. Also, preferably the aforementioned electronic unit further comprises an RFID reader which is part of, or is operationally connected to, the electronic device, and this RFID reader may be as described further above. Therefore, in a very preferred embodiment, the system comprises an electronic unit, and the latter also comprises an RFID reader which comprises two antennas. These two antennas may be directed towards different directions as described further above. Most preferably said electronic unit having the two antennas is (located) at a tooth of the pick-up comb. Hence, when the system comprises an electronic unit, the latter is preferably located at tooth of the pickup device. In some embodiments the system comprises two electronic units of which one is integrated with the pick-up comb, or the arm, or the pick-up device. Also, in an embodiment the at least one motion sensor includes an accelerometer and an inertial measurement unit.

In an embodiment, the pick-up comb is integrated with the arm. In another preferred embodiment, the pick-up comb is removably attached to the arm. In the latter case, it may be possible to form the system by providing a pick-up comb which comprises the system's sensors and electronic device, and attaching said pick-up comb to an arm which has at its end the pick-up device (trunnion adapter) and the first load cell. Said arm may be already installed to the garbage truck before attaching to it the pickup comb. Optionally the second load cell may be at a connection between the pick-up comb and the arm or maybe at an optionally present additional structure or frame which may be configured to support the pick-up comb and/or the arm. Said additional structure or frame may be an optional part of the pick-up comb.

In an embodiment, the system further comprises a base connected to the arm, the base and the pick-up device being at opposed ends of the arm, the base preferably comprising a pin and a bushing configured to enable a rotation of the arm. In some embodiments which comprise said base and also comprise the aforementioned optional additional structure or frame, the base is located at said additional structure or frame such that it allows that the arm can rotate or pivot about the base. This way the pick-up device attached to the rotatable arm may move closer to, or away from, the pick-up comb, depending on whether the system is to engage the garbage truck using the pick-up comb or the pick-up device, respectively. In another embodiment where the pick-up comb is attached along the arm, the latter and the pick-up comb are lengthwise substantially parallel to each other.

In an embodiment according to the first aspect of the invention, the system further comprising a proximity sensor. In an embodiment wherein the system comprises said optional proximity sensor, the latter is configured to detect a rotation, a closure or a retraction of the arm towards a garbage truck when the system is operationally installed on the garbage truck, preferably the proximity sensor being operationally connected to the electronic device. In an embodiment wherein the system comprises said optional proximity sensor, the latter is an inductive sensor. The proximity sensor may be very useful when the arm can pivot about a base, as for example is described further above, for detecting whether the arm is at a first position where the garbage container can be engaged by the trunnion adapter (the pick-up device), or is at second position where said container can be engaged by the pick-up comb. Additionally, or alternatively, said proximity sensor can be used for triggering the electronic device to stop or start using the load cells attached to the pick-up comb or the pick-up device for measuring the weight of the garbage container. In another preferred embodiment comprising a proximity sensor, the latter is configured to detect a locking of the garbage container by the system, said locking comprising the system applying a pressure on the garbage container, and the proximity sensor is further configured to trigger the electronic device to disregard or prevent weight measurements during said locking process. For the locking of the container, the system may optionally comprise a locking bar which during the collection process may press against the container so the latter does not fall off the system when and if the container is turned over for being emptied.

In a preferred embodiment according to the first aspect of the invention, the pick-up device comprises a trigger which is configured to be activated when the pickup device engages the trunnion, and to trigger the electronic device or the first load cell.

In an embodiment the electronic device of the system, or an electronic unit comprising said electronic device, is configured (e.g. is programmed) to measure a first weight of the garbage container during a lifting exercised on the container by the system installed on a collection mechanism of the truck and in operation, measure a second weight of the garbage container during a lowering exercised on the container by the system, and the electronic device is further configured to estimate a weight of a content of the garbage container as a difference between the first and the second weights. Hence, by knowing the first weight of the container when the latter is raised and before it is emptied in the truck, and by knowing the second weight of the container after the latter has been emptied, the weight of the garbage in the container can be estimated. Alternatively, the weight could be estimated from a single measurement, if the weight of the container itself (i.e. when is emptied) is known (e.g. registered) in advance.

A second aspect of the present invention concerns the use of the system of the first aspect, in a garbage collection process.

A third aspect of the present invention concerns a garbage truck comprising a system which is according to the first aspect of the invention.

In an embodiment of the garbage truck which is according to the third aspect of the invention, the truck comprises a lifting mechanism configured for lifting garbage containers, and the system is installed at, or is part of, said lifting mechanism.

In an embodiment which is according to the third aspect the system is installed at a rear of the garbage truck.

### Brief Description of Drawings

FIG. 1 is a view of an embodiment according to the first aspect of the invention.
FIG. 2 shows parts of the embodiment of FIG. 1.
FIG. 3 shows parts of the embodiment of FIG. 1.
FIG. 4 is an exploded view of an embodiment according to the invention.
FIG. 5 is an exploded view of FIG. 1.
FIG. 6 shows parts of the embodiment of FIG. 1.
FIG. 7 shows a garbage truck according to the third aspect of the invention, and also shows types of garbage containers with can be collected by the garbage truck.
FIG. 8 shows one of the garbage containers of FIG. 7, at different positions (positions 28a and 28b) during the collection of the garbage container by the garbage truck according to the invention.
FIG. 9 shows one of the garbage containers of FIG. 7, at different positions during the collection of the garbage container by the garbage truck according to the invention.
FIG. 10 shows one of the garbage containers of FIG. 7, and also shows a lip of the container.
FIG. 11 shows a type of a pick-up comb of an embodiment of the invention.
FIG. 12 is an exploded view showing some parts of an embodiment according to the invention.
FIG. 13 shows parts of an embodiment of a system according to the invention.
FIG. 14 is an exploded view of an embodiment of a system of the first aspect of the invention
FIG. 15 is a side view of the embodiment of FIG. 14.
FIG. 16 is a top view of the embodiment of FIG.14.
FIG. 17 shows components of an embodiment of a system according to the invention.
FIG. 18 shows a part of an embodiment of a system according to the invention.
FIG. 19 shows a part of an embodiment of a system according to the invention.
FIG. 20 shows a part of an embodiment of a system according to the invention.
FIG. 21 shows an exploded view of a part of an embodiment of a system according to the invention.
FIG. 22 shows an embodiment of the system on a garbage truck engaging a garbage container via a lip of the container.
FIG. 23 shows an embodiment of the system on a garbage truck engaging a trunnion of a garbage container.
FIG. 24 shows an embodiment of the system on a garbage truck engaging a trunnion of a garbage container.
FIG. 25 shows an embodiment of a system according to the first aspect of the invention, using the pick-up device of the system for engaging a trunnion of a garbage container.
FIG. 26 shows the same system engaging the garbage container shown in FIG. 25, using the comb of the system.
FIG. 27 shows an embodiment of a system according to the first aspect of the inventing, which has two arms at an open position.
FIG. 28 shows the embodiment shown in FIG. 27, with the two arms retracted at a closed position.
FIG. 29 shows a schematic diagram of components of an embodiment of the system according to the first aspect of the invention.

### Description of Embodiments of the Invention.

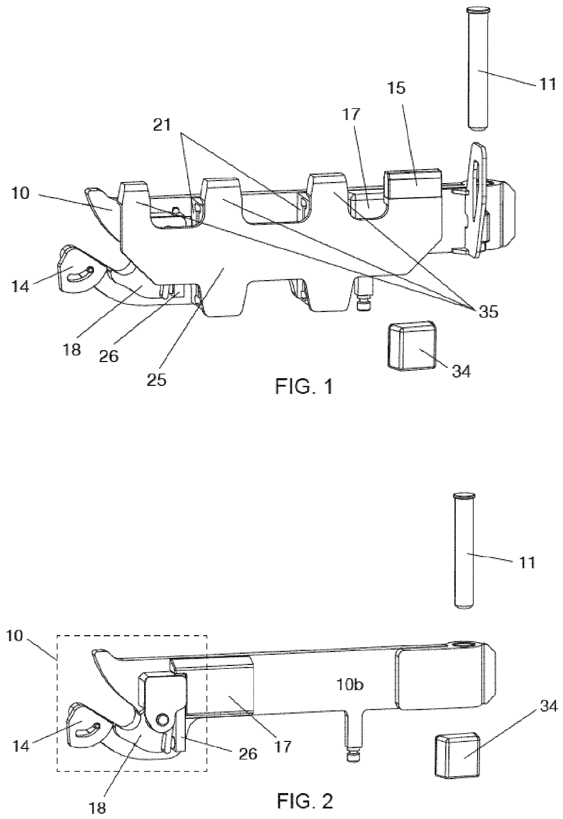

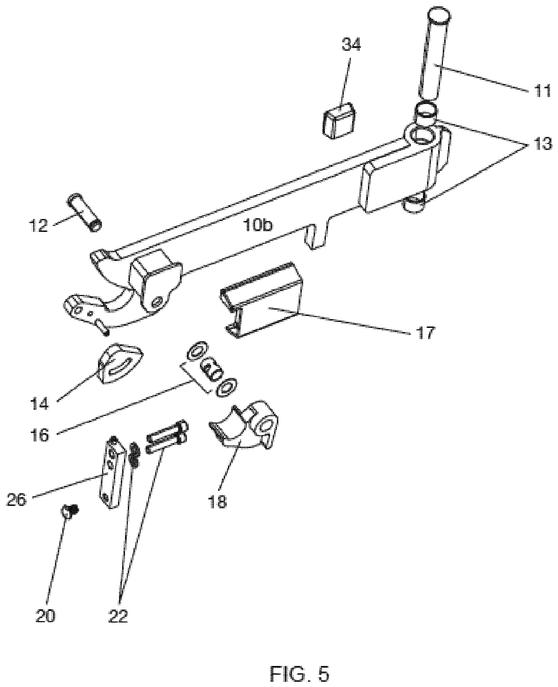

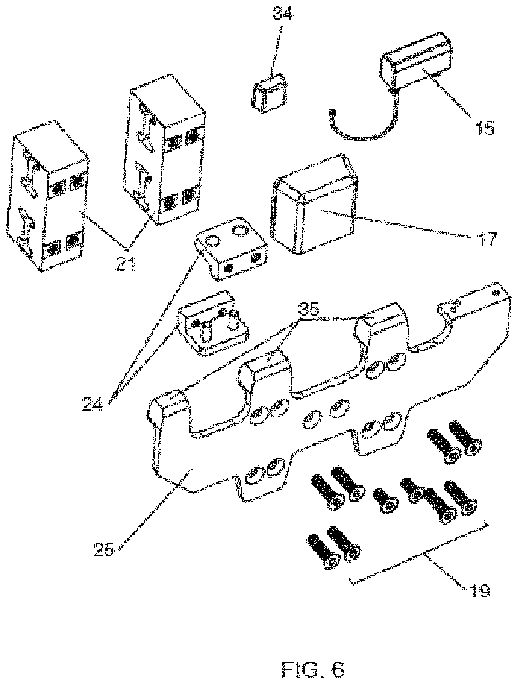

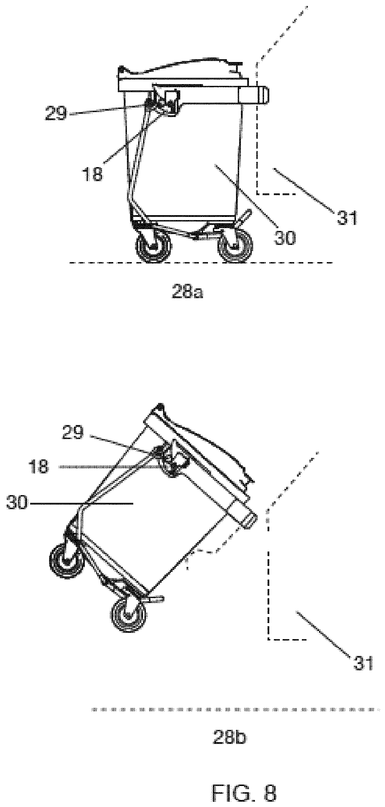

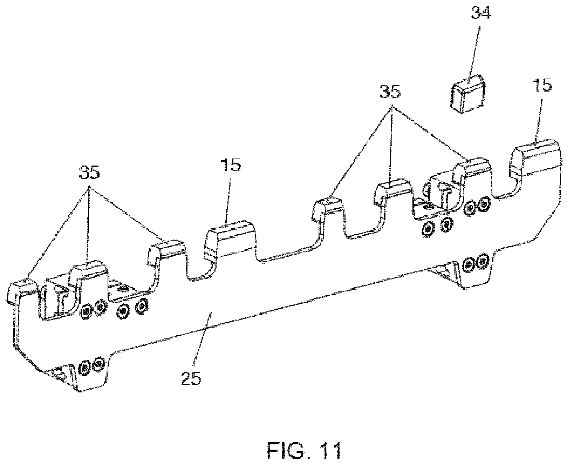

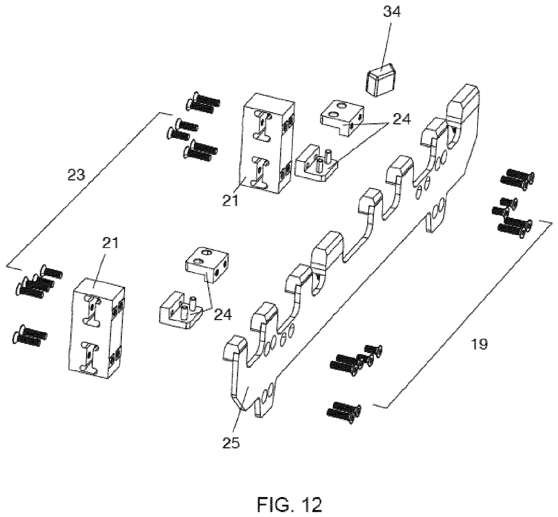

The following table 1 lists terms used herein for describing the features which are indicated with the respective numerical signs in FIG. 1-13, and also lists some alternative technical terms which are also used for describing the same features.

**Table 1**

| **Numerical Sign in** **FIG. 1-13** | **Technical Term** | **Alternative Technical Term** |
|---|---|---|
| 10 | Pick-up device | Trunnion adapter, grab, gripper |
| 10b | Arm, | Trunnion pick-up system, pick-up arm, collection arm, harvesting arm |
| 11 | pin | Trunnion lifting device axle |
| 12 | Pivot pin | Trunnion trigger axle |
| 13 | Bushing | |
| 14 | Safety mechanism | Trunnion locking system , safety |
| 15 | RFID Reader | RFID identification reader, RFID |
| 16 | bearing with sealing rings | Bushings with sealing ring |
| 17 | Electronic device | electronic data processing device |
| 18 | trigger | Trunnion trigger |
| 19 | Support screws | Supports - Bolts |
| 20 | Load cell touch pad | Load cell touch pad |
| 21 | Second load cell | Comp Load cell, two comb dynamometer cells |
| 22 | Support bolts | Supports - Bolts |
| 23 | support screws | Supports - Bolts |
| 24 | Load cell distortion limiter | Load cell overload system |
| 25 | Pick-up comb | Comb, bomp lifting device, collection |
| | | comb, pick-off comb |
| 26 | First Load cell | Load cell arm lifting device, first dynamometer |
| 27 | Lifting mechanism | pick-up system |
| 29 | trunnion | Container Trunnion, center of gravity pickup pin |
| 30 | Garbage container | Large-scale refuse container with trunnion, bucket |
| 31 | Garbage truck's lifting system | Rear position trunnion pick-up system, |
| 32 | lip | Reinforcing Rib (Rib) |
| 33 | Garbage container, | Comp waste and recycling container, bin |
| 34 | RFID Reader | RFID |
| 35 | pick-up teeth | Comp lifting device |
| 36 | bar | Pushing pad, push/rotate bar |
| 37 | Load cell distortion limiter | Pushing pad load cell overload system |
| 38 | Additional load cell | Pushing pad load cell, load cell |

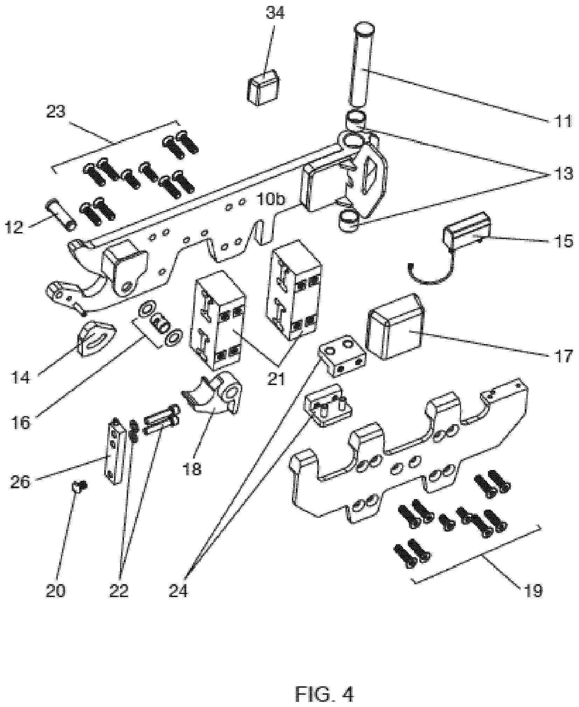

Below follows a description referring to FIG. 1-13. An embodiment of the system according to the invention is presented in FIG. 1, 2, 3 and 11, while FIG. 4, 5, 6 and 12 further aid for understanding how the system can be used for picking up and weighing garbage containers.

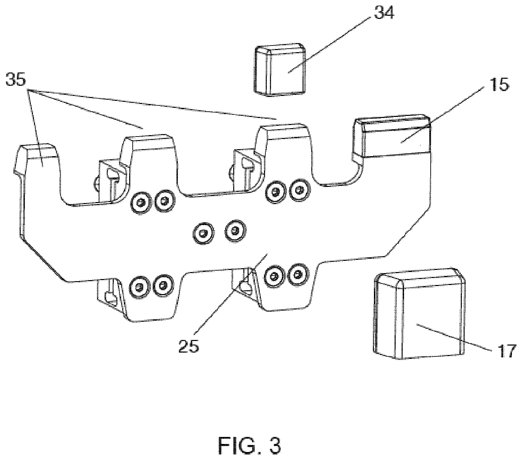

FIG. 1 shows a system installable on a garbage truck for weighing a plurality of garbage container types 30, 33, the system comprising: an arm 10b configured for supporting a garbage container 30, 33 of a plurality of types; a pick-up device 10 located at an end of the arm and configured to engage and hold a trunnion 29 of a garbage container of a first pickup type 30; a pick-up comb 25 attached along the arm 10b, or at another end of the arm 10b opposite the end where the pick-up device is located, and configured to engage and hold a lip 32 of a garbage container of a second pickup type 33; at least two load cells 21, 26 of which a first one 26 is connected to the pick-up device 10 and the second one 21 is connected to the pick-up comb 25, wherein the first load cell 26 is configured to measure a weight exerted on the pick-up device 10 when the latter engages the garbage container of the first pickup type 30, and the second load cell 26 is configured to measure a weight exerted on the pick-up comb 25 when the latter engages the garbage container of the second pickup type 33; at least one motion sensor (not shown) configured to record movement related to a collection of the garbage container of the first or second pickup type by the system; at least one inclination sensor (not shown) configured to sense an inclination of a garbage truck when the system is installed on the garbage truck; and at least one electronic device 17(shown in FIG. 2 and 3 configured to process and transmit data. Preferably, the inclination sensor and the motion sensor are within the electronic device's 17 shown casing which, in that case, defines an electronic unit that comprises the electronic device, the motion sensor and the inclination (tilt) sensor.

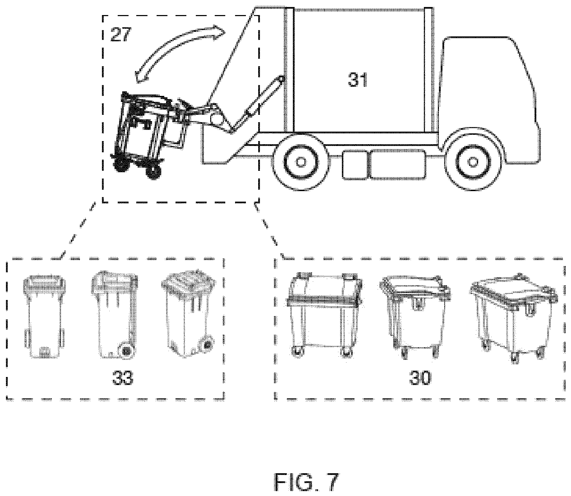

Hence, the system shown in FIG. 1 and 2 can be used for weighing garbage containers 30 whose pickup point is the trunnion 29. FIG. 7, 8 and 9 show a process of lifting the garbage container 30, wherein the container passes through different positions 28a, 28, 26 as it is lifted and rotated by a truck's lifting/collection mechanism 31 to which the system is installed.

With reference to FIG. 1-13, the arms 10b of a rear-loading garbage truck lifting system are held by means of a base bearing a pin 11 and bushings 13, the bushings 13 allowing for the arm's 10b support and rotation. The system shown in FIG. 1 comprises the pick-up device 10, a hook to secure the waste bins (garbage containers) in the system during collection, and a safety mechanism 14 of the pick-up device 10 which is activated during movement and advantageously aids locking the waste bin so that it remains in the lifting system throughout the collection process.

With reference to FIG. 1-13, the pick-up device 10 is a mechanical system which comprises a trigger 18 so that it can touch the bucket throughout the lifting. The trigger 18 cooperates with a pivot pin 12 and a bearing with sealing rings 16 in order to transfer forces from the contact with the bucket to the first load cell 26.

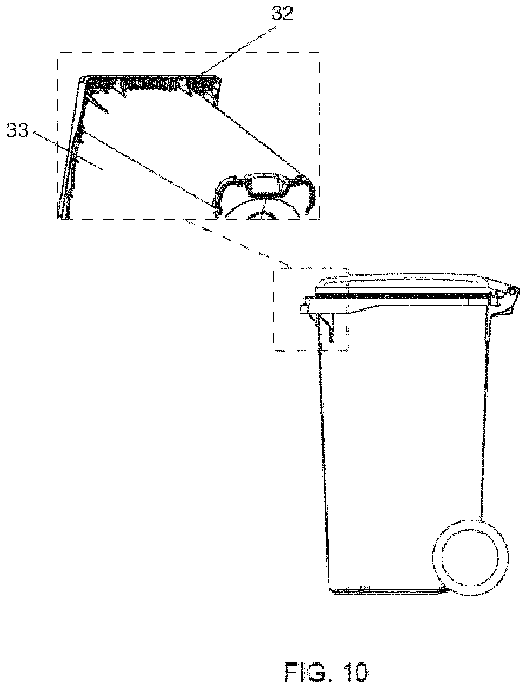

With respect to the embodiments of FIG. 1-13, the force is transferred to the load cell 26 through load cell contact 20. In the shown embodiment the placement of the load cell 26 is in such a preferred way as to advantageously always ensure a correct measurement of applied force. Also, with respect to the embodiments of FIG. 1-13, an RFID reader 34 applied to a suitable point of the lifting system provides identification of the bin (garbage container), when the point of contact of the bin is the grab 10 of the pick-up arm 10b. With respect to FIG. 1,3,4,11 and 12, the collection arm 10b can additionally carry on it the collection comb 25 (pick-up comb) which has the purpose of weighing bins whose point of contact with the lifting mechanism of the garbage truck is their lip 32 as the one shown in FIG. 10. With respect to FIG. 4, 6 and 12, on the pick-up arm 10b there are mounted two comb load cells (second load cells) 21 with support screws 23 and on the other side the pick-up comb 25 which in turn is screwed with support screws 19 which are according to the specific specifications of the respective load cell manufacturer. With respect to FIG. 4, 6 and 12, the shown comb 25 includes three pick-up teeth 35 spaced to specifications to work with buckets (garbage containers) which are according to European or other specifications. The comb 25 additionally has a fourth tooth position specially designed to accept an RFID identification reader 15 to provide bin identification. Also, with respect to the embodiments shown in FIG. 1-13, between the comb 25 and the arm 10b there is a system (means), which can be called load cell overload system or load cell distortion limiter 24, for limiting the torsion or distortion of the load cells, which, due to its design, allows the system to be used without affecting it, and can, in conditions of excessive distortion due to the heavy weight which is outside the specifications of the load cells, to stop the load cells' distortion in order to prevent the possibility of their rupture. Hence, the system advantageously provides additional safety, for example in the event of rupture or destruction of the load cells the comb can remain in place, preventing accidents without interrupting the operation of the garbage collection. Due to the above design shown in FIG. 1,3,4,11 and 12, the configuration for weighing (measurement of weight) on the comb 25 of the shown embodiments can act as an autonomous weighing system regardless of its position in the lifting system of the rear-loading garbage truck on which the system according to the first aspect of the invention can be installed. Moreover, the weighing on the comb 25 may work in parallel and independently of the weighing on the grab 10 of the harvesting arm 10b. It may be understood by the person skilled in the art, that the system according to the invention may be autonomous and independent from the lifting system 31 of the garbage truck, may have no common characteristics with existing weighing systems, and may be such that it can be placed in any rear loading lifting system.

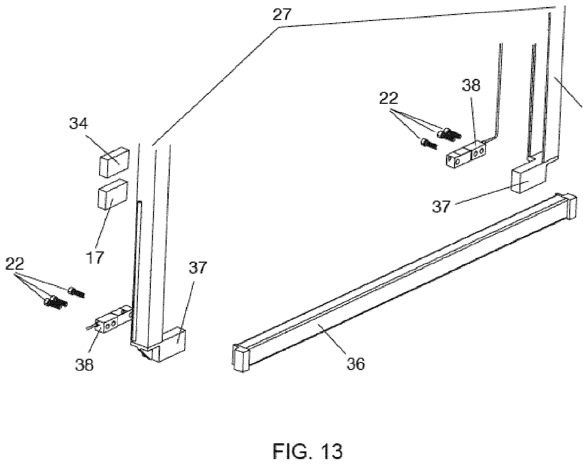

With respect to the embodiment shown in FIG. 13, as a further improvement, the system comprises also a lower push/rotate bar 36 which can push the container for turning it over during the collection process, and on the lower push/rotate bar 36 at one or more suitable points, there are installed and appropriately supported one or more additional load cells 38 with distortion limiter(s) 37. With respect to the embodiments shown in FIG. 1-13, at appropriate point of the system, there is installed an electronic data processing device 17, which can also be called or be a part of an electronic unit. The electronic device 17 can include one or more sensors for recording the pickup movement consisting of an inertial unit, either an accelerometer, a gyroscope, an inclinometer, or a magnetometer, or another for the for this purpose sensor, inclination sensor of the rear loading garbage truck 31 and typically has a processor, storage memory, wireless communication system and power supply system. The readings of each comb load cell 21, grab load cell 26, lower push/swing bar load cell 36 and sensors included or connected to the electronic data processing device/unit 17, may be taken together to measure the bucket weight and the weight of the contents of the bin. This data can be recorded, averaged and/or calculated in the data processing device (unit) 17 and sent wirelessly. As a further improvement of the invention, the electronic data processing and sending device 17 can be interconnected or include within its housing an RFID reader or other wireless or optical means of unique identification of the bins, satellite GNSS positioning, tachograph data reception and CAN bus data reception or OBD.

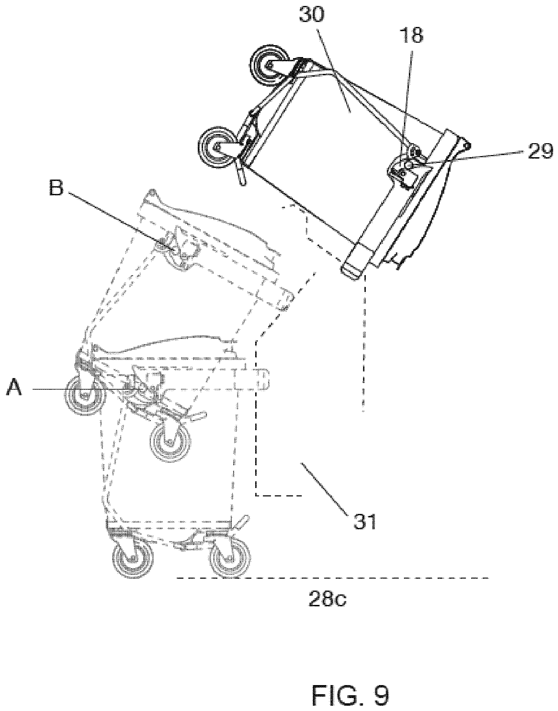

A preferred embodiment of a method for weighing using the system according to the invention, is as follows. For the accurate weighing of the container (bucket), there are performed a series of mechanical movements and measurements of sensors installed in/with the electronic data processing device 17. In the preferred embodiment, the system according to a first aspect of the invention is automatically activated by placing the pickup center of gravity pin (trunnion) 29 of the bucket 30 on the aforementioned optional trigger 18 of the system, or placing the bucket lip 32 of the bucket 33 on the pickup comb 25 without the need for intervention of any operator or electronic switch. With the start of the lifting system, the electronic device or central unit 17 takes continuous weighing measurements (i.e. weight measurement) where at specific times and through the positions between the points A and B shown in FIG. 9, and in relation to the position and the specific lifting angle, it gives the final highly accurate weighing result.

Advantageously the system's components can enable absolute measurement without interference from the rest of the mechanism of the waste lifting system. The combination of the arm 10b with the pick-up device 10 and the autonomous comb 25, the pick-up device preferably comprising the trigger 18, can enable accurate measurements when the system is in contact with the waste bin.

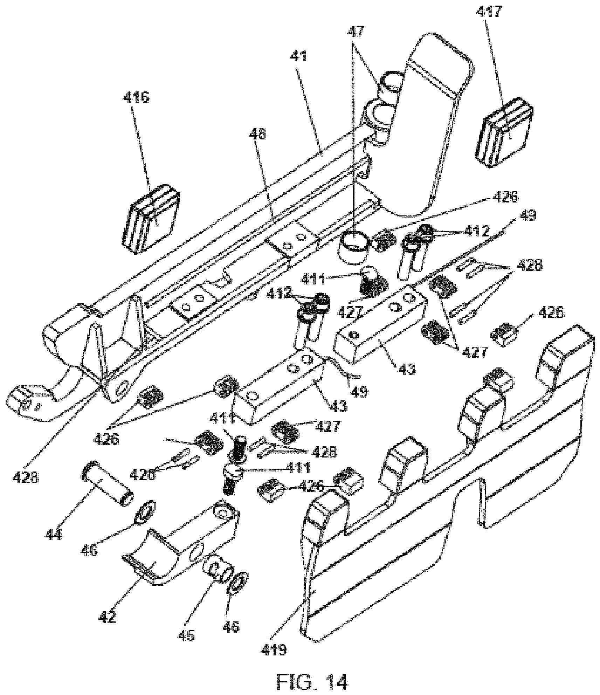

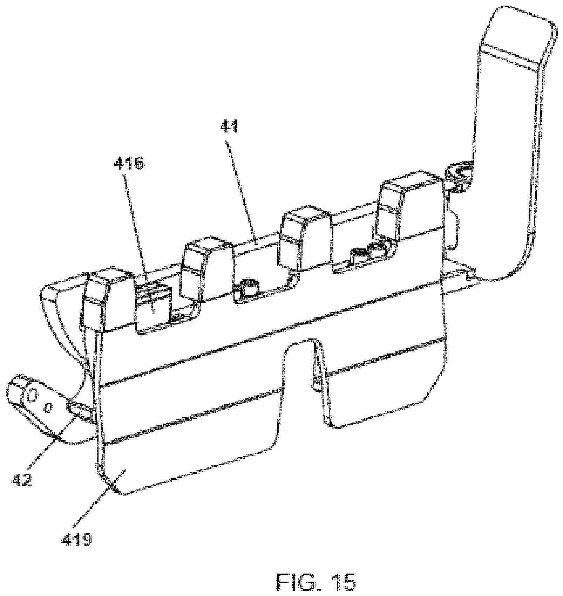

Below follows a description related to the embodiments shown in FIG. 14-24. The following table 2 lists terms used herein for describing the features which are indicated with the respective numerical signs in FIG. 14-24, and also lists some other alternative technical terms which are also used for describing the same features.

**Table 2**

| **Numerical Sign in** **FIG. 14-24** | **Technical Term** | **Alternative Technical Term** |
|---|---|---|
| 41 | arm | |
| 42 | Pick-up device | Arm gripper, gripper |
| 43 | Load cell | |
| 44 | Gripper pin | pin |
| 45 | bushing | Gripper bushing |
| 46 | washers | Gripper washers |
| 47 | bearings | Arm bearings |
| 48 | Protective tube | |
| 49 | Load cell's cable | |
| 410 | washers | Load cell washers |
| 411 | Contact of load cell | |
| 412 | screws | load cell support screws |
| 413 | Support screws | |
| 414 | cover | |
| 415 | pin | Arm pin |
| 416 | Movement sensor | |
| 417 | Electronic device | Device for processing and sending or transmitting data |
| 418 | Distortion limiter | Overload protection system |
| 419 | Pickup comb | bucket lip gripper |
| 420 | Extraction mechanism | pick-up mechanism |
| 421 | wheels | |
| 422 | trunnion | Bucket pin |
| 423 | bar | push/rotate bar, push/swivel bar |
| 425 | Inclination sensor | Tilt sensor |
| 426 | Chain anchors | |
| 427 | Chain links | chain |
| 428 | Chain pins | |
| 430 | Garbage container | bin |
| 431 | Garbage truck. Truck's support structure | |

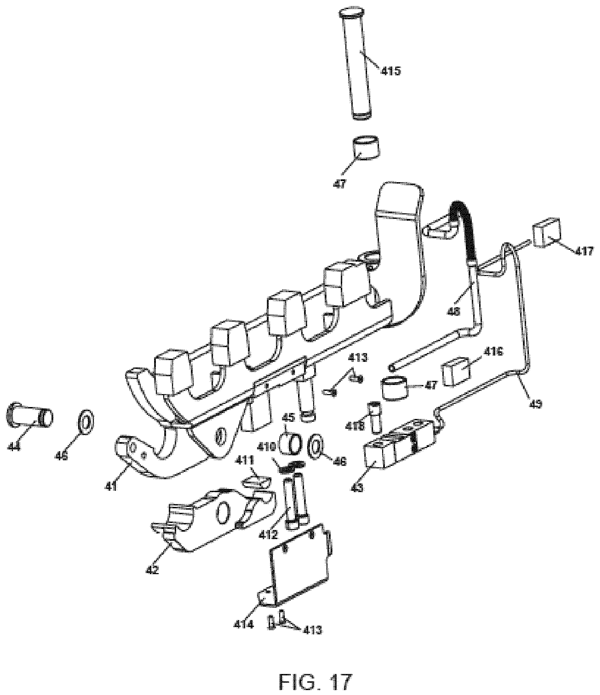

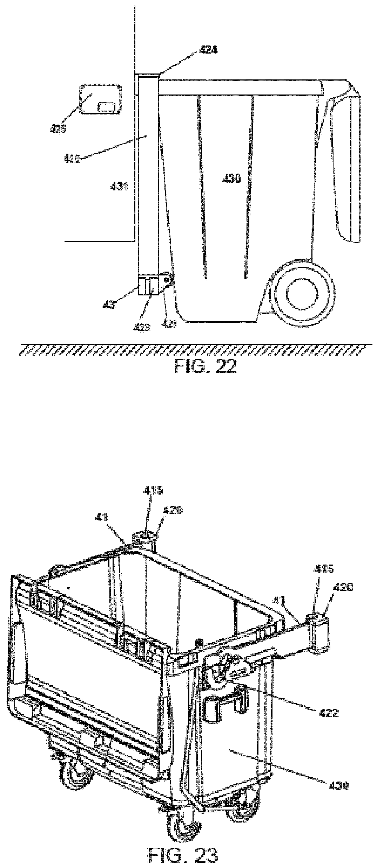

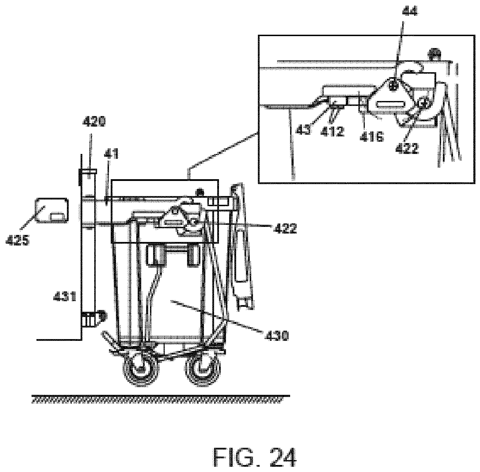

As shown FIG. 14-17, a load cell arrangement is installed on the arm bases 41. At the end of each arm 41 there is placed a pick-up device (gripper) 42 and through the gripper pin 44, the gripper bushing 45 and the gripper washers 46, which ensure good rotation of the gripper (pickup device) 42 without considerable resistance, the pick-up device can follow a circular motion and come into contact at an appropriate point through a load cell contact 411 with a load cell 43, which is supported on a specially designed base - limiter of distortion (distortion limiter) 418 by means of load cell washers 410 and load cell support screws 412. When engaged by the system, the bucket pin 422 (the trunnion of the garbage container) (shown in FIG. 23 and 24) rests on the arm gripper 42 during removal (collection of the container), and the bucket pin 422 with its weight activates the movement of the arm gripper 42 transferring the load to the load cell 43 perpendicular to this direction through the load cell contact 411. The particular embodiment shown in FIG. 14-17 can be installed on a vehicle 431 by replacing an existing arm of the vehicle, through the arm pin 415 (see FIG. 17 and 23) which moves through the arm bearings 47.

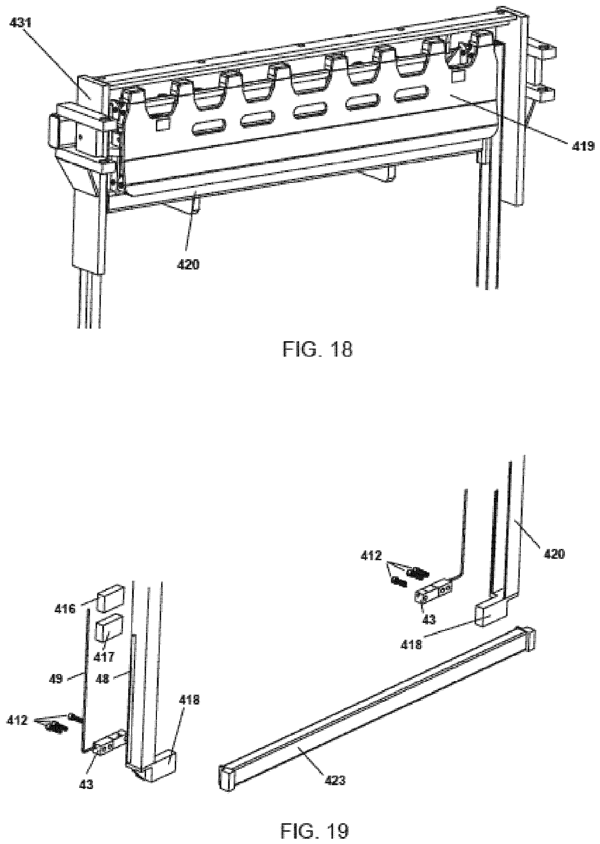

Referring to the embodiment shown in FIG. 14-18, 20 and 21, the pick-up comb 419, to which the lip of the bucket (garbage container) is fixed during removal, is supported by a mobile mechanism of heavy-duty multi-point chain links 427 advantageously enabling always carrying the bucket load in a direction perpendicular to the load cell 43. Heavy-duty chain anchors 426 are attached to both ends of the multi-point heavy-duty chain 427 with chain pins (links) 428. In the shown embodiment, additionally, load cells 43 are attached to the base of the arm 41 or to pick-up mechanism 420, and said load cells 43 are supported on a specially designed base - distortion limiter 418 by means of load cell washers 410 and load cell support screws 12, which are independent of the bucket lip gripper 419, through special load cell contacts 411 that advantageously ensure that the movement and load will be transferred to the load cell 43. Referring to the embodiment shown in FIG. 14-18, 20 and 21, the bottom of the bucket lip gripper (pick-up comb) 419 holds the bucket (garbage container) off the lower push/rotate bar 423) (see FIG. 19) during the initial bucket removal (collection) stage.

With respect to the embodiment shown in FIG. 19, a load cell assembly 43 is installed on the lower push/rotate bar 423 of the bucket. In the same embodiment, at a suitable point on the lower push/rotate bar 423, one or more load cells 43 are installed which are supported in a desired way on the bar. In the same embodiment, each load cell 43 that is connected to the bar, is attached to the extraction mechanism 420 either with suitable support screws 412 or in any other suitable way, and is equipped with a distortion limiter 418.

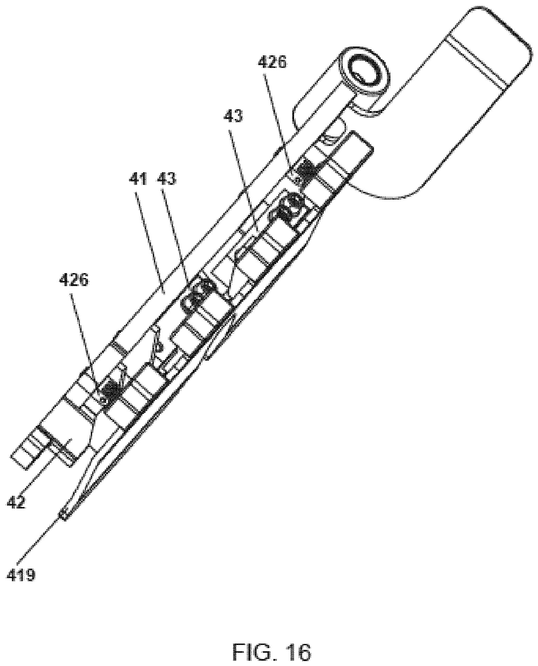

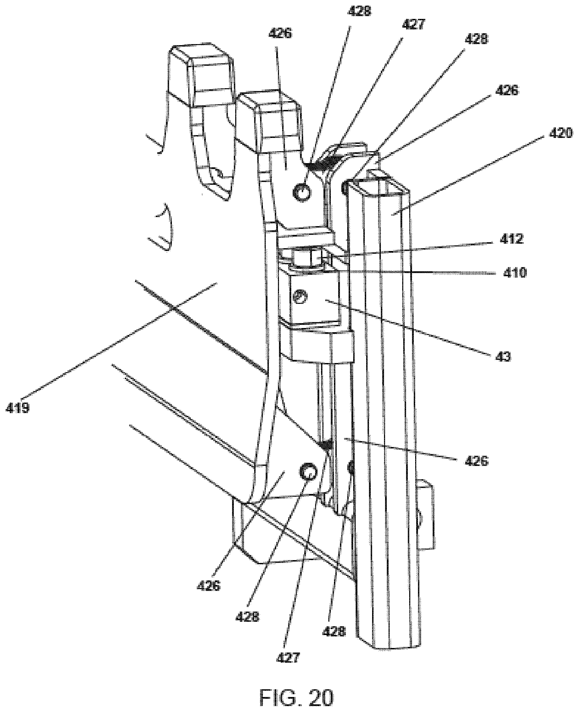

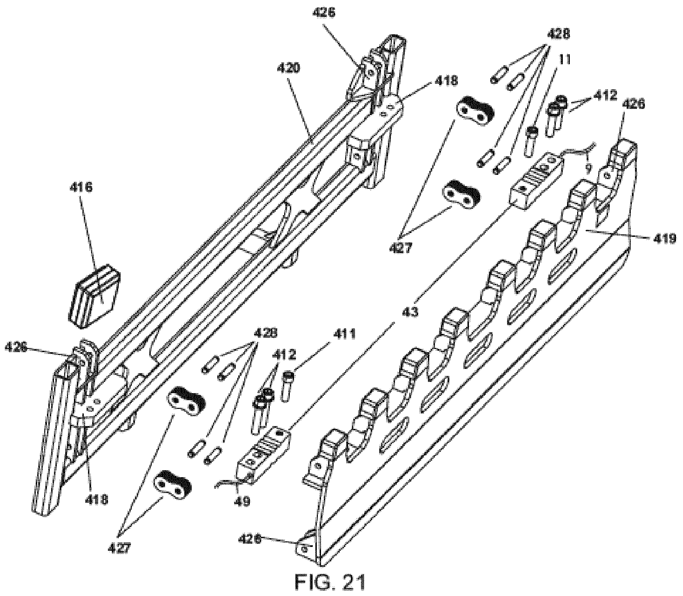

Preferably the aforementioned load cell contacts 411 can be a metal plate, a specially shaped screw or other suitable component, so that, advantageously, it rests on the load cell without being affected by different load directions other than the direction of the measured weight. Also, the aforementioned heavy duty chain anchors 426 can be of different sizes and types as shown in FIG. 14,16 (one type) and FIG. 20, 21 (different type). Advantageously, the arm grabber (pick-up device) 42 or bin lip grabber (pick-up comb) 419 mechanisms can work independently of the load cells 43, thereby giving the system the ability to operate safely and carry out removals of containers in the event of a problem, damage, rupture or even removal of the load cells 43. Hence, in the system according to the first aspect of the invention, optionally and preferably the pickup device and/or the pick-up comb are configured to engage and support or lift the garbage container independently of whether the respective first and/or load cell is damaged, ruptured or removed from the system.

Also, referring to the embodiments shown in FIG. 14-24, all load cells 43 arrangements have a cable 49 protected by a protective tube 48 and possibly (depending on the vehicle) a cover 414 which is fixed with cover support screws 413 (see FIG. 17) and adjusted on it in an appropriate way in order to advantageously protect the system and its electronic parts from pressure, washing, shocks or any other external influencing factor, also advantageously, contributing to providing correct operation. Referring to the embodiments shown in FIG. 14-24, at suitable points of the pick-up mechanism, one or more sensors 416 are installed to record the pick-up movement (see FIG. 14,15, 19 and 21) during pick-up, consisting of an inertial unit, either an accelerometer or a gyroscope, either an inclinometer, or a magnetometer, or another sensor for this purpose. A tilt sensor (inclination sensor) 425 of the bin collection vehicle is installed at a suitable point on the bin collection vehicle (see FIG. 22) or is attached to or integrated in a component, e.g. a mechanical or electronic component, of the system of the first aspect of the invention.

Also, referring to the embodiments shown in FIG. 14-24, the measurements from the load cells 43, the inclination sensor 425 and the motion sensor 416 are recorded in an electronic device 417 for processing and sending the data, and the electronic device 417 has a processor, memory storage, wireless communication system and power supply system. Optionally and preferably, the readings from the load cells 43, the vehicle inclination sensor 425 and the sensors 416 for recording the collection movement are taken into account to measure the weight of the bin (garbage container) and the weight of the contents of the bin. Preferably the data is recorded, averaged and/or calculated in the data processing and sending device 417, and sent wirelessly.

Referring to the embodiment shown in FIG. 19 and 22, the push/rotate bar 423 of the bucket has supports where friction limiting wheels 421 (see FIG. 22) of suitable material are placed to reduce the friction of the contact of the bucket with the push/swivel bar 423.

Optionally and preferably, the electronic device 417 for processing and sending the data is interconnected or includes within a housing of it an RFID reader or other wireless or optical means of unique identification of the bins, satellite GNSS positioning, receiving tachograph data, receiving CAN bus data or OBD.

Optionally and preferably, the pick-up motion recording sensor 416, the electronic data processing and sending device 417 and the vehicle inclination sensor 425 are integrated into one device or electronic unit.

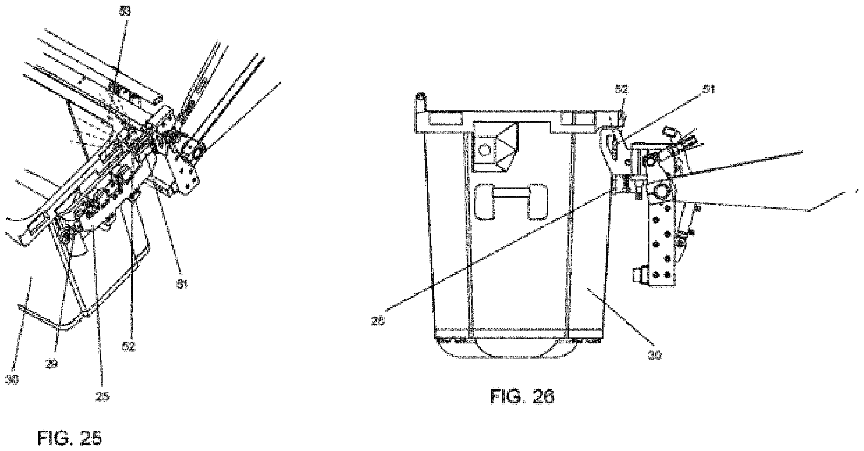

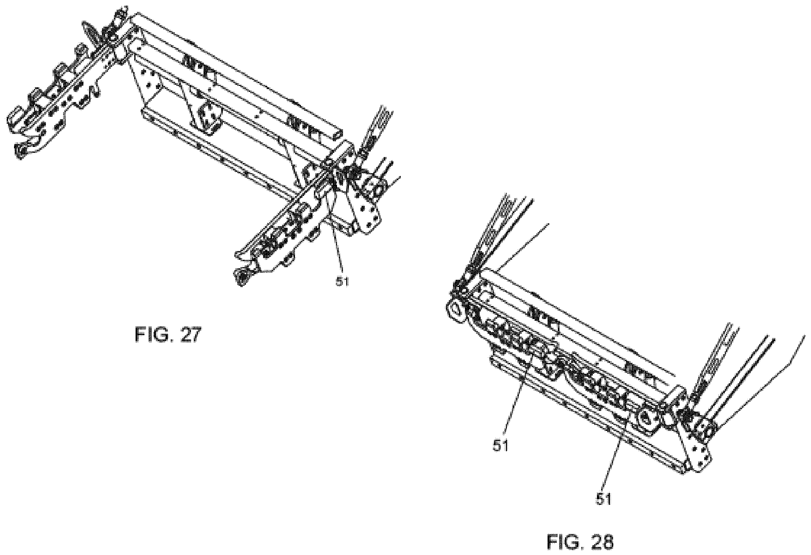

With reference to the embodiment shown in FIG. 25 and 26, the system's comb 25 has a tooth, also called RFID tooth 51, wherein an RFID reader is integrated. As shown in FIG. 25, the range 52 of the RFID reader's antenna is such that it covers the position of an RFID tag 53 that preferably is attached to or is integrated in the garbage container (bin) 30. Said range 52 in FIG.25 is indicated by the dashed lines. The RFID reader of the embodiment shown in FIG. 25 and 26 has two antennas directed at different directions with respect to each other. The first antenna is directed towards a first direction towards the RFID tag 53 of the bin 30, so that the RFID reader can read the tag when the system engages the trunnion 29 of the container via the system's pick-up device, as shown in FIG. 25. The second antenna is directed towards a second direction, which can be substantially normal to the first one, so that it is directed and can read said tag 53 when the system engages the lip of the bin 30 via the comb, as is shown in FIG. 26. The system of FIG. 25 and 26 has two arms each of which having a pick-up device and a comb, as shown in FIG. 27 and 28 wherein the garbage container has been omitted. Each of the arms also has a respective RFID tooth, wherein the RFID reader is integrated in an electronic unit comprising the required electronic components such as the device for processing and transmitting data and an inertial measurement unit (IMU) which is configured (i.e. has the appropriate sensors) to sense/detect motion and tilt (inclination). When the arms at are an open position, as shown in FIG. 27, the system can engage the trunnions of the garbage container via the two system's (one system in each arm) pickup devices. When the arms are retracted at a closed position, the system can engage the lip of the garbage container via the two systems' (one system in each arm) pick-up combs.

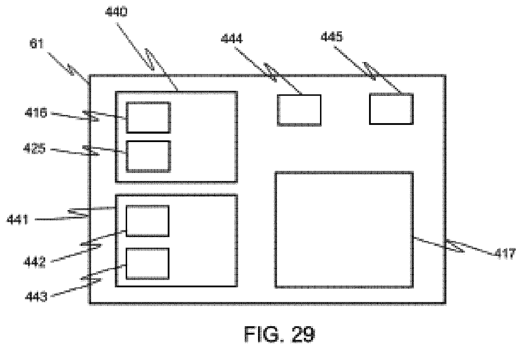

FIG. 29 schematically shows some components of an embodiment of an electronic unit 61 installable on a system, preferably or in a comb's tooth, the unit comprising an electronic device 417 configured for processing and transmitting data, an inertial measurement unit 440 which comprises an inclination sensor 425 and a motion sensor 416, and an RFID reader 441 which comprises two antennas 442, 443, a battery acting as a power source 444 of the unit, and an electronic interface 445 for operationally communicating or controlling the load cells.

## Claims

1. A system installable on a garbage truck for weighing a plurality of garbage container types, the system comprising:
an arm (10b, 41) configured for supporting a garbage container (30, 33, 430) of a plurality of types;
a pick-up device (10, 42) located at an end of the arm and configured to engage and hold a trunnion (29, 422) of a garbage container (430, 30, 33) of a first pickup type;
a pick-up comb (25, 419) attached along the arm (10b, 41), or at another end of the arm (10b, 41) opposite the end where the pick-up device is located, and
configured to engage and hold a lip (32) of a garbage container (430, 30, 33) of a second pickup type;
at least two load cells (21, 26, 43) of which a first one (26, 43) is connected to the pick-up device (10, 42) and the second one (21, 43) is connected to the pick-up comb (25, 419), wherein the first load cell (26, 43) is configured to measure a weight exerted on the pick-up device (10, 42) when the latter engages the garbage container (430, 30, 33) of the first pickup type, and the second load cell (21, 43) is configured to measure a weight exerted on the pick-up comb (25, 419) when the latter engages the garbage container (430, 30, 33) of the second pickup type;
at least one motion sensor (416) configured to record movement related to a collection of the garbage container (430, 30, 33) of the first or second pickup type by the system;
at least one inclination sensor (425) configured to sense an inclination of a garbage truck when the system is installed on the garbage truck (431);
at least one electronic device (417) configured to process and transmit data; and
one or more electronic units (61), each electronic unit comprising one or more of each of the at least one electronic device (417), the at least one inclination sensor (425) and the at least one motion sensor (416), preferably each electronic unit (61) further comprising an RFID reader (441) which is part of or is operationally connected to the electronic device;
wherein one of the one or more electronic units (61) is integrated with the pick-up comb (25, 419), or the arm (10b, 41), or the pick-up device (10, 42); and wherein preferably the system comprises two electronic units (61).

2. A system according to claim 1, further comprising a third load cell (21, 43) connected to the pick-up comb (25, 419), wherein the third load cell (21, 43) is configured to measure a weight exerted on the pick-up comb (25, 419) when the latter engages the garbage container (430, 30, 33) of the second pickup type, the third load cell (21, 43) being at a distance from the second load cell (21, 43) such that the second and the third load cells (21, 43) to measure load distribution along the pick-up comb (25, 419); and/or
further comprising a bar (36, 423) which is located and configured to contact and push the garbage container (430, 30, 33) of the first or second pickup type at a point of the container, such that, when the garbage container (430, 30, 33) is at an operational position on a ground and is engaged by the pick-up device (10, 42) or the pick-up comb (25, 419), said point of the container (430, 30, 33) contacting the bar (36, 423) is located lower with respect to the points of contact of the container with said pick-up device (10, 42) or pick-up comb (25, 419), respectively, preferably the system further comprising one or more additional load cells (38, 43) connected to the bar (36, 423) and configured to measure a weight exerted on the bar (36, 423) when the latter pushes the garbage container.

3. A system according to any of the previous claims, wherein the at least one electronic device (417) is operationally connected to at least a corresponding one of each of the at least one motion sensor (416), the at least two load cells (21, 26, 43), and the at least one inclination sensor (425).

4. A system according to any of the previous claims, further comprising two or more load cell distortion limiters (24, 37, 418), and wherein each load cell (21, 26, 43, 38) is connected to a corresponding one of the load cell distortion limiters (24, 37), each load cell distortion limiter (24, 37, 418) being configured to limit the distortion of the corresponding load cell (21, 26, 38, 43) when said distortion is above a threshold value, and wherein preferably each of the load cell distortion limiters (24, 37, 418) connected to a corresponding one of the load cells (21, 26, 43, 38) is also correspondingly connected to, and is configured to support in case of failure of, one of the load cells, the pick-up device (10, 42), the pick-up comb (25, 419) or the bar (36, 423) connected with said corresponding load cell (21, 26, 43, 38).

5. A system according to any of the previous claims, wherein the at least one motion sensor (416) comprises any of an inertial measurement unit (440), an accelerometer, a gyroscope, an inclinometer (425), magnetometer, or another type of sensor, and/or wherein preferably the at least one motion sensor includes an accelerometer and an inertial measurement unit.

6. A system according to any of the previous claims, wherein the system comprises an inertial measurement unit (440) which comprises the at least one motion sensor (416) and/or the at least one inclination sensor (425).

7. A system according to any of the previous claims, further comprising at least one RFID reader (441) which is part of, or is operationally connected to, the at least one electronic device (417), preferably the system comprising either one RFID reader (441) integrated with a tooth (51) of the pick-up comb (25, 419), or two RFID readers (441) of which one is integrated with the tooth (51) of the pick-up comb (25, 419) and the other is integrated with the arm (10b, 41), and wherein preferably the at least one RFID reader (441) comprises two antennas (442, 443) which are pointed towards two respective directions which are different to each other.

8. A system according to any of the previous claims, wherein the electronic device (417) is connectable with or comprises, preferably within a housing of it, any of an RFID reader (441) for bin identification, means for identifying bins, means for GNSS satellite positioning, means for interfacing with and downloading data from a tachograph, means for interfacing with and downloading data from a CAN bus, means for interfacing with and downloading data from an on-board diagnostics, OBD, system, a communication system or a combination thereof.

9. A system according claims to any of the previous claims, wherein one electronic unit (61) is at a tooth (51) of the pick-up comb (25, 419) and/or the pick-up comb (25, 419) is integrated with the arm (10b, 41) or, preferably, is removably attached to the arm (10b, 41)..

10. A system according to any of the previous claims, wherein the system further comprises a base connected to the arm (10b, 41), the base (10b, 41) and the pick-up device (10, 42) being at opposed ends of the arm (10b, 41), the base comprising a pin (11, 415) and a bushing (13, 47) configured to enable a rotation of the arm (10b, 41).

11. A system according to any of the previous claims, wherein the pick-up comb (25, 419) and the arm (10b, 41) are lengthwise parallel to each other.

12. A system according to any of the previous claims, further comprising a proximity sensor, the proximity sensor being preferably an inductive sensor and being preferably configured to:
(i) detect a locking of the garbage container by the system, said locking comprising the system applying a pressure on the garbage container, and the proximity sensor is further configured to trigger the electronic device to disregard or prevent weight measurements during said locking process; or
(ii) detect a rotation, a closure or a retraction of the arm towards a garbage truck when the system is operationally installed on the garbage truck, preferably the proximity sensor being operationally connected to the electronic device (417).

13. A system according to any of the previous claims, wherein the pick-up device (10, 42) comprises a trigger (18) which is configured to be activated when the pickup device (10, 42) engages the trunnion (29, 422), and to trigger the electronic device (417) or the first load cell (26, 43).

14. A system according to any of the previous claims, wherein the electronic device is programmable and configured to monitor a series of weight measurements, identify a deviation within said series, and according to said deviation disregard some of the weight measurements of said series.

15. A garbage truck comprising a system which is according to any of claims 1-14, wherein preferably the garbage truck comprises a mechanism (27, 31) configured for lifting garbage containers, and wherein the system is installed at, or is part of, said lifting mechanism (27, 31), and/or wherein preferably the system is installed at a rear of the garbage truck.

## Patentansprüche

1. Auf einem Müllwagen installierbares System zum Wiegen einer Vielzahl von Müllbehältertypen, wobei das System Folgendes umfasst:
einen Arm (10b, 41), der dazu konfiguriert ist, einen Müllbehälter (30, 33, 430) einer Vielzahl von Typen zu tragen;
eine Aufnahmevorrichtung (10, 42), die sich an einem Ende des Arms befindet und dazu konfiguriert ist, mit einem Zapfen (29, 422) eines Müllbehälters (430, 30, 33) eines ersten Aufnahmetyps in Eingriff zu kommen und diesen zu halten;
einen Aufnahmekamm (25, 419), der entlang des Arms (10b, 41) oder an einem anderen Ende des Arms (10b, 41) gegenüber dem Ende, an dem sich die Aufnahmevorrichtung befindet, angebracht ist und dazu konfiguriert ist, mit einer Lippe (32) eines Müllbehälters (430, 30, 33) eines zweiten Aufnahmetyps in Eingriff zu kommen und diese zu halten;
mindestens zwei Wägezellen (21, 26, 43), von denen eine erste (26, 43) mit der Aufnahmevorrichtung (10, 42) verbunden ist und die zweite (21, 43) mit dem Aufnahmekamm (25, 419) verbunden ist, wobei die erste Wägezelle (26, 43) dazu konfiguriert ist, ein Gewicht zu messen, das auf die Aufnahmevorrichtung (10, 42) ausgeübt wird, wenn letztere mit dem Müllbehälter (430, 30, 33) des ersten Aufnahmetyps in Eingriff kommt, und die zweite Wägezelle (21, 43) dazu konfiguriert ist, ein Gewicht zu messen, das auf den Aufnahmekamm (25, 419) ausgeübt wird, wenn letzterer mit dem Müllbehälter (430, 30, 33) des zweiten Aufnahmetyps in Eingriff kommt;
mindestens einen Bewegungssensor (416), der dazu konfiguriert ist, eine Bewegung im Zusammenhang mit einer Sammlung des Müllbehälters (430, 30, 33) des ersten oder zweiten Aufnahmetyps durch das System aufzuzeichnen;
mindestens einen Neigungssensor (425), der dazu konfiguriert ist, eine Neigung eines Müllwagens zu erfassen, wenn das System auf dem Müllwagen (431) installiert ist; mindestens eine elektronische Vorrichtung (417), die dazu konfiguriert ist, Daten zu verarbeiten und zu übertragen; und eine oder mehrere elektronische Einheiten (61), wobei jede elektronische Einheit eine oder mehrere von jeder der mindestens einen elektronischen Vorrichtung (417), des mindestens einen Neigungssensors (425) und des mindestens einen Bewegungssensors (416) umfasst, wobei vorzugsweise jede elektronische Einheit (61) ferner ein RFID-Lesegerät (441) umfasst, das Teil der elektronischen Vorrichtung ist oder betriebsmäßig mit dieser verbunden ist;
wobei eine der einen oder mehreren elektronischen Einheiten (61) in den Aufnahmekamm (25, 419), den Arm (10b, 41) oder die Aufnahmevorrichtung (10, 42) integriert ist; und wobei das System vorzugsweise zwei elektronische Einheiten (61) umfasst.

2. System nach Anspruch 1, das ferner eine dritte Wägezelle (21, 43) umfasst, die mit dem Aufnahmekamm (25, 419) verbunden ist, wobei die dritte Wägezelle (21, 43) dazu konfiguriert ist, ein Gewicht zu messen, das auf den Aufnahmekamm (25, 419) ausgeübt wird, wenn letzterer mit dem Müllbehälter (430, 30, 33) des zweiten Aufnahmetyps in Eingriff kommt, wobei die dritte Wägezelle (21, 43) sich in einem Abstand von der zweiten Wägezelle (21, 43) befindet, so dass die zweite und die dritte Wägezelle (21, 43) zum Messen der Lastverteilung entlang des Aufnahmekamms (25, 419); und/oder das ferner eine Stange (36, 423) umfasst, die dazu angeordnet und konfiguriert ist, mit dem Müllbehälter (430, 30, 33) des ersten oder zweiten Aufnahmetyps an einem Punkt des Behälters in Kontakt zu kommen und diesen zu schieben, so dass, wenn sich der Müllbehälter (430, 30, 33) in einer Betriebsposition auf einem Boden befindet und mit der Aufnahmevorrichtung (10, 42) oder dem Aufnahmekamm (25, 419) in Eingriff steht, der Punkt des Behälters (430, 30, 33), der mit der Stange (36, 423) in Kontakt steht, in Bezug auf die Kontaktpunkte des Behälters mit der Aufnahmevorrichtung (10, 42) oder dem Aufnahmekamm (25, 419) jeweils tiefer liegt, wobei das System vorzugsweise ferner eine oder mehrere zusätzliche Wägezellen (38, 43) umfasst, die mit der Stange (36, 423) verbunden und dazu konfiguriert sind, ein Gewicht zu messen, das auf die Stange (36, 423) ausgeübt wird, wenn letztere den Müllbehälter schiebt.

3. System nach einem der vorhergehenden Ansprüche, wobei die mindestens eine elektronische Vorrichtung (417) betriebsmäßig mit mindestens einem entsprechenden von jedem von dem mindestens einen Bewegungssensor (416), den mindestens zwei Wägezellen (21, 26, 43) und dem mindestens einen Neigungssensor (425) verbunden ist.

4. System nach einem der vorhergehenden Ansprüche, das ferner zwei oder mehr Wägezellen-Verzerrungsbegrenzer (24, 37, 418) umfasst, und wobei jede Wägezelle (21, 26, 43, 38) mit einem entsprechenden von den Wägezellen-Verzerrungsbegrenzern (24, 37) verbunden ist, wobei jeder Wägezellen-Verzerrungsbegrenzer (24, 37, 418) dazu konfiguriert ist, die Verzerrung der entsprechenden Wägezelle (21, 26, 38, 43) zu begrenzen, wenn die Verzerrung über einem Schwellenwert liegt, und wobei vorzugsweise jeder der Wägezellen-Verzerrungsbegrenzer (24, 37, 418), der mit einer entsprechenden von den Wägezellen (21, 26, 43, 38) verbunden ist, auch entsprechend mit einem von den Wägezellen, der Aufnahmevorrichtung (10, 42), dem Aufnahmekamm (25, 419) oder der Stange (36, 423), die mit der entsprechenden Wägezelle (21, 26, 43, 38) verbunden ist, verbunden ist, und dazu konfiguriert ist, im Falle eines Ausfalls dieser zu stützen.

5. System nach einem der vorhergehenden Ansprüche, wobei der mindestens eine Bewegungssensor (416) einen beliebigen von einer Trägheitsmesseinheit (440), einem Beschleunigungsmesser, einem Gyroskop, einem Neigungsmesser (425), einem Magnetometer oder einem anderen Typ von Sensor umfasst und/oder wobei vorzugsweise der mindestens eine Bewegungssensor einen Beschleunigungsmesser und eine Trägheitsmesseinheit beinhaltet.

6. System nach einem der vorhergehenden Ansprüche, wobei das System eine Trägheitsmesseinheit (440) umfasst, die den mindestens einen Bewegungssensor (416) und/oder den mindestens einen Neigungssensor (425) umfasst.

7. System nach einem der vorhergehenden Ansprüche, das ferner mindestens ein RFID-Lesegerät (441) umfasst, das Teil der mindestens einen elektronischen Vorrichtung (417) ist oder betriebsmäßig mit dieser verbunden ist, wobei das System vorzugsweise entweder ein RFID-Lesegerät (441), das in einen Zahn (51) des Aufnahmekamms (25, 419) integriert ist, oder zwei RFID-Lesegeräte (441) umfasst, von denen eines in den Zahn (51) des Aufnahmekamms (25, 419) integriert ist und das andere in den Arm (10b, 41) integriert ist, und wobei vorzugsweise das mindestens eine RFID-Lesegerät (441) zwei Antennen (442, 443) umfasst, die in zwei jeweilige Richtungen zeigen, die sich voneinander unterscheiden.

8. System nach einem der vorhergehenden Ansprüche, wobei die elektronische Vorrichtung (417) mit einem beliebigen von einem RFID-Lesegerät (441) zur Mülleimeridentifizierung, Mitteln zum Identifizieren von Mülleimern, Mitteln zur GNSS-Satellitenortung, Mitteln zum Herstellen einer Schnittstelle mit einem Fahrtenschreiber und zum Herunterladen von Daten von diesem, Mitteln zum Herstellen einer Schnittstelle mit einem CAN-Bus und zum Herunterladen von Daten von diesem, Mitteln zum Herstellen einer Schnittstelle mit einem On-Board-, OBD-Diagnosesystem und zum Herunterladen von Daten von diesem, einem Kommunikationssystem oder einer Kombination davon verbindbar ist oder diese umfasst, vorzugsweise in einem Gehäuse davon.

9. System nach einem der vorhergehenden Ansprüche, wobei eine elektronische Einheit (61) an einem Zahn (51) des Aufnahmekamms (25, 419) vorhanden ist und/oder der Aufnahmekamm (25, 419) in den Arm (10b, 41) integriert oder vorzugsweise abnehmbar am Arm (10b, 41) angebracht ist.

10. System nach einem der vorhergehenden Ansprüche, wobei das System ferner eine Basis umfasst, die mit dem Arm (10b, 41) verbunden ist, wobei sich die Basis (10b, 41) und die Aufnahmevorrichtung (10, 42) an gegenüberliegenden Enden des Arms (10b, 41) befinden, wobei die Basis einen Stift (11, 415) und eine Buchse (13, 47) umfasst, die dazu konfiguriert sind, eine Drehung des Arms (10b, 41) zu ermöglichen.

11. System nach einem der vorhergehenden Ansprüche, wobei der Aufnahmekamm (25, 419) und der Arm (10b, 41) in Längsrichtung parallel zueinander sind.

12. System nach einem der vorhergehenden Ansprüche, das ferner einen Näherungssensor umfasst, wobei der Näherungssensor vorzugsweise ein induktiver Sensor ist und vorzugsweise zu Folgendem konfiguriert ist:
(i) Erkennen einer Verriegelung des Müllbehälters durch das System, wobei die Verriegelung das Ausüben von Druck auf den Müllbehälter durch das System umfasst und der Näherungssensor ferner dazu konfiguriert ist, die elektronische Vorrichtung auszulösen, um Gewichtsmessungen während des Verriegelungsvorgangs zu ignorieren oder zu verhindern; oder
(ii) Erkennen einer Drehung, eines Schließens oder eines Zurückziehens des Arms in Richtung eines Müllwagens, wenn das System betriebsmäßig auf dem Müllwagen installiert ist, wobei vorzugsweise der Näherungssensor betriebsmäßig mit der elektronischen Vorrichtung (417) verbunden ist.

13. System nach einem der vorhergehenden Ansprüche, wobei die Aufnahmevorrichtung (10, 42) einen Auslöser (18) umfasst, der dazu konfiguriert ist, aktiviert zu werden, wenn die Aufnahmevorrichtung (10, 42) mit dem Zapfen (29, 422) in Eingriff kommt, und die elektronische Vorrichtung (417) oder die erste Wägezelle (26, 43) auszulösen.

14. System nach einem der vorhergehenden Ansprüche, wobei die elektronische Vorrichtung programmierbar und dazu konfiguriert ist, eine Reihe von Gewichtsmessungen zu überwachen, eine Abweichung innerhalb der Reihe zu identifizieren und entsprechend der Abweichung einige der Gewichtsmessungen der Reihe zu ignorieren.

15. Müllwagen, der ein System nach einem der Ansprüche 1-14 umfasst, wobei der Müllwagen vorzugsweise einen Mechanismus (27, 31) umfasst, der dazu konfiguriert ist, Müllbehälter anzuheben, und wobei das System an dem Hebemechanismus (27, 31) installiert ist oder einen Teil davon bildet und/oder wobei das System vorzugsweise an einem Heck des Müllwagens installiert ist.

## Revendications

1. Système pouvant être installé sur un camion à ordures pour peser une pluralité de types de conteneurs à ordures, le système comprenant :
un bras (10b, 41) configuré pour supporter un conteneur à ordures (30, 33, 430) d'une pluralité de types ;
un dispositif de ramassage (10, 42) situé à une extrémité du bras et configuré pour amener en prise et maintenir un tourillon (29, 422) d'un conteneur à ordures (430, 30, 33) d'un premier type de ramassage ;
un peigne de ramassage (25, 419) fixé le long du bras (10b, 41), ou à une autre extrémité du bras (10b, 41) à l'opposé de l'extrémité où est situé le dispositif de ramassage, et configuré pour amener en prise et maintenir une lèvre (32) d'un conteneur à ordures (430, 30, 33) d'un deuxième type de ramassage ;
au moins deux cellules de charge (21, 26, 43) dont une première (26, 43) est reliée au dispositif de ramassage (10, 42) et la seconde (21, 43) est reliée au peigne de ramassage (25, 419), dans lequel la première cellule de charge (26, 43) est configurée pour mesurer un poids exercé sur le dispositif de ramassage (10, 42) lorsque ce dernier est en prise avec le conteneur à ordures (430, 30, 33) du premier type de ramassage, et la deuxième cellule de charge (21, 43) est configurée pour mesurer un poids exercé sur le peigne de ramassage (25, 419) lorsque ce dernier est en prise avec le conteneur à ordures (430, 30, 33) du deuxième type de ramassage ;
au moins un capteur de mouvement (416) configuré pour enregistrer un mouvement lié à une collecte du conteneur à ordures (430, 30, 33) du premier ou du deuxième type de ramassage par le système ;
au moins un capteur d'inclinaison (425) configuré pour détecter une inclinaison d'un camion à ordures lorsque le système est installé sur le camion à ordures (431) ; au moins un dispositif électronique (417) configuré pour traiter et
transmettre des données ; et une ou plusieurs unités électroniques (61), chaque unité électronique comprenant un ou plusieurs de chacun parmi l'au moins un dispositif électronique (417), l'au moins un capteur d'inclinaison (425) et l'au moins un capteur de mouvement (416), de préférence chaque unité électronique (61) comprenant en outre un lecteur RFID (441) qui fait partie du ou est relié de manière fonctionnelle au dispositif électronique ;
dans lequel l'une de l'une ou plusieurs unités électroniques (61) est intégrée au peigne de ramassage (25, 419), ou au bras (10b, 41), ou au dispositif de ramassage (10, 42) ; et dans lequel de préférence le système comprend deux unités électroniques (61).

2. Système selon la revendication 1, comprenant en outre une troisième cellule de charge (21, 43) reliée au peigne de ramassage (25, 419), dans lequel la troisième cellule de charge (21, 43) est configurée pour mesurer un poids exercé sur le peigne de ramassage (25, 419) lorsque ce dernier est en prise avec le conteneur à ordures (430, 30, 33) du deuxième type de ramassage, la troisième cellule de charge (21, 43) étant à une certaine distance de la deuxième cellule de charge (21, 43) de telle sorte que les deuxième et troisième cellules de charge (21, 43) pour mesurer la répartition de charge le long du peigne de ramassage (25, 419) ; et/ou
comprenant en outre une barre (36, 423) qui est située et configurée pour entrer en contact avec et pousser le conteneur à ordures (430, 30, 33) du premier ou deuxième type de ramassage en un point du conteneur, de telle sorte que, lorsque le conteneur à ordures (430, 30, 33) est en position fonctionnelle sur un sol et est amené en prise par le dispositif de ramassage (10, 42) ou le peigne de ramassage (25, 419), ledit point du conteneur (430, 30, 33) en contact avec la barre (36, 423) est situé plus bas par rapport aux points de contact du conteneur avec ledit dispositif de ramassage (10, 42) ou peigne de ramassage (25, 419), respectivement, de préférence le système comprenant en outre une ou plusieurs cellules de charge (38, 43) supplémentaires reliées à la barre (36, 423) et configurées pour mesurer un poids exercé sur la barre (36, 423) lorsque cette dernière pousse le conteneur à ordures.

3. Système selon l'une quelconque des revendications précédentes, dans lequel l'au moins un dispositif électronique (417) est relié de manière fonctionnelle à au moins un capteur correspondant de chacun parmi l'au moins un capteur de mouvement (416), les au moins deux cellules de charge (21, 26, 43), et l'au moins un capteur d'inclinaison (425).

4. Système selon l'une quelconque des revendications précédentes, comprenant en outre deux limiteurs de distorsion de cellule de charge (24, 37, 418) ou plus, et dans lequel chaque cellule de charge (21, 26, 43, 38) est reliée à l'un des limiteurs de distorsion de cellule de charge (24, 37) correspondant, chaque limiteur de distorsion de cellule de charge (24, 37, 418) étant configuré pour limiter la distorsion de la cellule de charge (21, 26, 38, 43) correspondante lorsque ladite distorsion est supérieure à une valeur seuil, et dans lequel de préférence chacun des limiteurs de distorsion de cellule de charge (24, 37, 418) reliés à l'une des cellules de charge (21, 26, 43, 38) correspondante est également relié de manière correspondante à, et est configuré pour supporter en cas de défaillance de, l'une des cellules de charge, le dispositif de ramassage (10, 42), le peigne de ramassage (25, 419) ou la barre (36, 423) reliée à la cellule de charge (21, 26, 43, 38) correspondante.

5. Système selon l'une quelconque des revendications précédentes, dans lequel l'au moins un capteur de mouvement (416) comprend l'un quelconque parmi une unité de mesure inertielle (440), un accéléromètre, un gyroscope, un inclinomètre (425), un magnétomètre, ou un autre type de capteur, et/ou dans lequel de préférence l'au moins un capteur de mouvement comprend un accéléromètre et une unité de mesure inertielle.

6. Système selon l'une quelconque des revendications précédentes, dans lequel le système comprend une unité de mesure inertielle (440) qui comprend l'au moins un capteur de mouvement (416) et/ou l'au moins un capteur d'inclinaison (425).

7. Système selon l'une quelconque des revendications précédentes, comprenant en outre au moins un lecteur RFID (441) qui fait partie de, ou est relié de manière fonctionnelle à, l'au moins un dispositif électronique (417), de préférence le système comprenant soit un lecteur RFID (441) intégré à une dent (51) du peigne de ramassage (25, 419), soit deux lecteurs RFID (441) dont l'un est intégré à la dent (51) du peigne de ramassage (25, 419) et l'autre est intégré au bras (10b, 41), et dans lequel de préférence l'au moins un lecteur RFID (441) comprend deux antennes (442, 443) qui sont pointées vers deux directions respectives qui sont différentes l'une de l'autre.

8. Système selon l'une quelconque des revendications précédentes, dans lequel le dispositif électronique (417) peut être relié à ou comprend, de préférence au sein d'un boîtier de celui-ci, l'un quelconque parmi un lecteur RFID (441) d'identification de bacs, un moyen d'identification de bacs, un moyen de positionnement par satellite GNSS, un moyen d'interface avec et de téléchargement de données à partir d'un tachygraphe, un moyen d'interface avec et de téléchargement de données à partir d'un bus CAN, un moyen d'interface avec et de téléchargement de données à partir d'un système de diagnostic embarqué, OBD, un système de communication ou une combinaison de ceux-ci.

9. Système selon l'une quelconque des revendications précédentes, dans lequel une unité électronique (61) se trouve au niveau d'une dent (51) du peigne de ramassage (25, 419) et/ou le peigne de ramassage (25, 419) est intégré au bras (10b, 41) ou, de préférence, est fixé de manière amovible au bras (10b, 41).

10. Système selon l'une quelconque des revendications précédentes, dans lequel le système comprend en outre une base reliée au bras (10b, 41), la base (10b, 41) et le dispositif de ramassage (10, 42) étant aux extrémités opposées du bras (10b, 41), la base comprenant une broche (11, 415) et une douille (13, 47) configurées pour permettre une rotation du bras (10b, 41).

11. Système selon l'une quelconque des revendications précédentes, dans lequel le peigne de ramassage (25, 419) et le bras (10b, 41) sont parallèles dans le sens de la longueur l'un par rapport à l'autre.

12. Système selon l'une quelconque des revendications précédentes, comprenant en outre un capteur de proximité, le capteur de proximité étant de préférence un capteur inductif et est de préférence configuré pour :
(i) détecter un verrouillage du conteneur à ordures par le système, ledit verrouillage comprenant le système appliquant une pression sur le conteneur à ordures, et le capteur de proximité est en outre configuré pour déclencher le dispositif électronique afin d'ignorer ou d'empêcher les mesures de poids pendant le processus de verrouillage ; ou
(ii) détecter une rotation, une fermeture ou une rétraction du bras vers un camion à ordures lorsque le système est installé de manière fonctionnelle sur le camion à ordures, de préférence le capteur de proximité étant relié de manière fonctionnelle au dispositif électronique (417).

13. Système selon l'une quelconque des revendications précédentes, dans lequel le dispositif de ramassage (10, 42) comprend un déclencheur (18) qui est configuré pour être activé lorsque le dispositif de ramassage (10, 42) est en prise avec le tourillon (29, 422), et pour déclencher le dispositif électronique (417) ou la première cellule de charge (26, 43).

14. Système selon l'une quelconque des revendications précédentes, dans lequel l'appareil électronique est programmable et configuré pour surveiller une série de mesures de poids, identifier un écart au sein de ladite série et, en fonction dudit écart, ignorer certaines des mesures de poids de ladite série.

15. Camion à ordures comprenant un système selon l'une quelconque des revendications 1 à 14, dans lequel de préférence le camion à ordures comprend un mécanisme (27, 31) configuré pour soulever les conteneurs à ordures, et dans lequel le système est installé au niveau, ou fait partie, dudit mécanisme de levage (27, 31), et/ou dans lequel de préférence le système est installé à l'arrière du camion à ordures.
